# DEMANDE DE BREVET EUROPEEN

(11) **EP 1 296 133 A1**
(43) Date de publication de la demande: **26.03.2003**
(21) Numéro de dépôt: 01810919.9
(22) Date de dépôt: 21.09.2001
(51) Int. Cl.: G01N 27/447, B01L 3/00, B01J 19/00

(54) **Dispositif miniaturisé destiné au transport et à l'analyse d'un échantillon liquide et son procédé de fabrication**

(71) Demandeur: Brunner, Jean, 2300 La Chaux-de-Fonds (CH)
(72) Inventeur: Brunner, Jean, 2300 La Chaux-de-Fonds (CH)
(74) Mandataire: Gresset, Jean

(57) **Abrégé**

L'invention concerne un dispositif miniaturisé destiné au transport et à l'analyse d'un échantillon liquide, comportant:
- une plaque inférieure (10) dont la face supérieure est percée d'un canal (14) destiné à recevoir l'échantillon,
- une plaque supérieure (22) dont la face inférieure est appliquée sur la plaque inférieure et munie d'au moins un orifice de remplissage disposé de manière à déboucher dans le canal (14), et
- des moyens rendre les deux plaques solidaires l'une de l'autre et fermer la canal de manière étanche,
caractérisé en ce que lesdits moyens comportent:
- un rebord en surépaisseur (26) formant le pourtour de l'une desdites faces et lié de manière étanche à l'autre de ces faces, et
- un joint d'étanchéité (20) interposé entre lesdites faces le long des bords du canal (14).

## Description

La présente invention concerne un dispositif miniaturisé destiné au transport et à l'analyse de micro-échantillons liquides, notamment par des méthodes optiques ou électrochimiques. L'invention concerne également un procédé de fabrication de ce dispositif.

De tels dispositifs sont des outils particulièrement utiles dans le domaine de la chimie et de la biochimie, ainsi que l'attestent, par exemple, les publications suivantes: "Polymer microfabrication methods for microfluidic analytical applications" ( Holger Becker et Al. - Electrophoresis 2000, 21, 12-26) et "Fabrication of microfluidic systems in poly(dimethylsiloxane)" (J. Cooper McDonald - Electrophoresis 2000, 21, 27-40).

Ces dispositifs sont généralement utilisés en réseaux à haute densité regroupant plusieurs centaines d'unités. Par ailleurs, ils ne sont pas réutilisables. On comprend, dès lors, qu'il soit très important de les produire à faible coût et aussi miniaturisés que possible, sans que leur étanchéité et la précision de leurs dimensions, notamment, en soit affectées.

Le document WO 98/45693 décrit un tel porte échantillon qui est formé de deux plaques collées ensemble, soit:
- une plaque inférieure dont la face supérieure est percée d'un canal destiné à recevoir l'échantillon de liquide, et
- une plaque supérieure munie d'au moins un orifice disposé de manière à déboucher dans le canal.

La présente invention a pour but de fournir un porte échantillon du type ci-dessus, répondant parfaitement aux exigences mentionnées précédemment.

De façon plus précise, l'invention concerne un dispositif miniaturisé destiné au transport et à l'analyse d'un échantillon liquide, du type comportant:
- une plaque inférieure dont la face supérieure est percée d'un canal destiné à recevoir le liquide,
- une plaque supérieure dont la face inférieure est appliquée sur la plaque inférieure et munie d'au moins un orifice de remplissage disposé de manière à déboucher dans le canal, et
- des moyens rendre les deux plaques solidaires l'une de l'autre et fermer la canal de manière étanche,
caractérisé en ce que ces moyens comportent:
- un rebord en surépaisseur formant le pourtour de l'une desdites faces et lié de manière étanche à l'autre de ces faces, et
- un joint d'étanchéité interposé entre lesdites faces le long des bords du canal.

Le joint d'étanchéité peut soit être un élément rapporté, par exemple, en silicone soit faire partie intégrante de l'une des plaques.

De façon avantageuse, le canal comporte une cuvette, formant réservoir, à l'endroit où débouche l'orifice de remplissage, en forme d'entonnoir.

L'invention concerne également un procédé de fabrication du dispositif défini ci-dessus qui comporte les caractéristiques suivantes:
- le rebord est lié à l'autre face par soudage aux ultra-sons;
- lorsque le joint d'étanchéité est rapporté, il est déposé par tampographie;
- lorsque le joint d'étanchéité fait partie intégrante de l'une des plaques, il est, comme le rebord, lié à l'autre face par soudage aux ultra-sons.

D'autres caractéristiques de l'invention ressortiront de la description qui va suivre, faite en regard du dessin annexé, dans lequel:
- les figures 1a et 1b représentent la plaque inférieure du dispositif, vue respectivement de dessus et en coupe selon I-I;
- les figures 2a et 2b représentent la plaque supérieure du dispositif, vue respectivement de dessus et en coupe selon II-II; et
- la figure 3 est une vue en coupe selon I-I du dispositif assemblé.

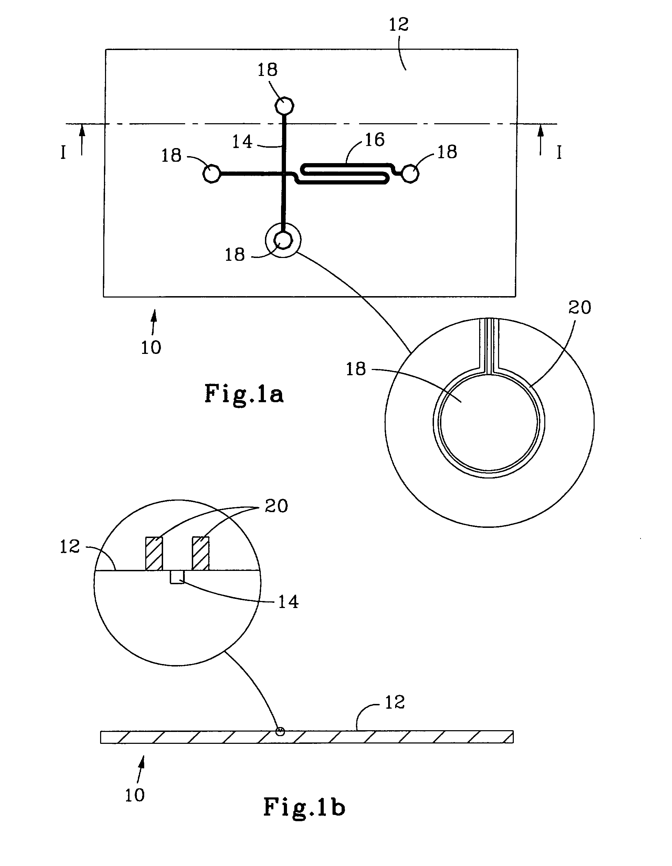

On se référera, tout d'abord, aux figures 1a et 1b qui montrent, en 10, une plaque rigide rectangulaire en plastique, dite plaque inférieure, qui a, typiquement, une longueur de 50 mm, une largeur de 30 mm et une épaisseur de 1,5 mm.

La face supérieure 12 de cette plaque est creusée d'un canal 14 à section sensiblement carrée, de 0.08 mm de côté, et en forme de croix. Son bras 16, plus long que les trois autres, est replié en trois portions parallèles. Les extrémités des quatre bras de la croix se terminent par une cuvette 18 ayant, typiquement, un diamètre de 1,95 mm. Bien entendu, la canal 14 peut avoir une forme quelconque.

Dans ce mode de réalisation, la plaque inférieure 10, dotée du canal 14 et des cuvettes 18, est réalisée par injection, selon des techniques connues de l'homme de métier.

Le canal 14 et les quatre cuvettes 18 sont longés par un joint d'étanchéité rapporté 20 ayant initialement, dans l'exemple décrit, une section sensiblement rectangulaire de 0,1 mm d'épaisseur et de 0,2 mm de hauteur. On notera que ce joint est légèrement décalé, typiquement de 0,05 mm, par rapport aux bords du canal et des cuvettes.

Le joint d'étanchéité 20 est avantageusement constitué d'une peinture de silicone - ou de tout autre matériau ayant des propriétés analogues - qui a été déposée sur la plaque 10 par tampographie, selon une technique bien connue de l'homme de métier.

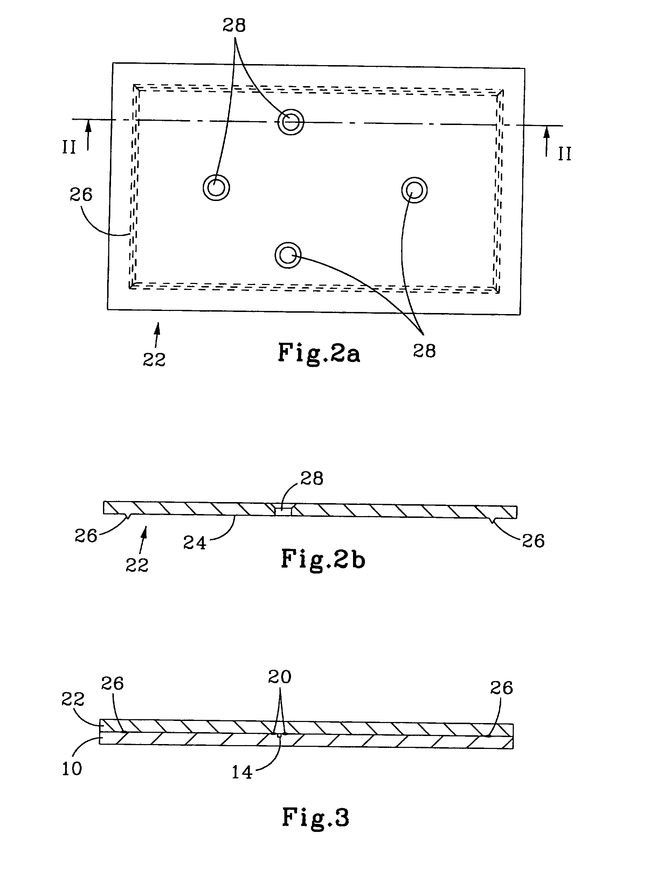

On se référera maintenant aux figures 2a et 2b qui montrent, en 22, une deuxième plaque rigide rectangulaire, dite plaque supérieure, réalisée par injection, destinée à prendre place sur la plaque inférieure 10, de même dimensions qu'elle et, comme elle, en plastique.

La face inférieure 24 de la plaque supérieure 22 est munie, le long de ses quatre côtés, d'un rebord en surépaisseur 26, présentant initialement un profil triangulaire dont la hauteur est, dans l'exemple décrit, de 0,2 à 0,25 mm.

La plaque 22 est, en outre, percée de quatre orifices 28 en forme d'entonnoir dont la partie évasée se trouve du côté de sa face supérieure. Ces orifices sont positionnés de manière à ce que, lorsque la plaque supérieure 22 est placée sur la plaque inférieure 10, ils débouchent exactement dans les cuvettes 18.

La figure 3 montre le dispositif selon l'invention prêt à l'emploi. La liaison des deux plaques 10 et 22 l'une à l'autre est réalisée par soudage aux ultra-sons, selon une technique bien connue de l'homme de métier, en même temps qu'une pression est exercée sur la plaque supérieure 22. Lors de cette opération, le rebord 26, agissant comme directeur d'énergie, est mis en fusion et se trouve écrasé, avec le joint 20, jusqu'à ce que les deux plaques soient en contact et ferment le canal 14.

A ce moment, le rebord fondu 26 assure la liaison des deux plaques entre elles, tandis que le joint 20, écrasé, assure la fermeture étanche du canal 14.

Le dispositif ainsi réalisé peut alors recevoir son échantillon de liquide qui est injecté dans le canal 14 au travers de l'orifice 28 du bras 16 par l'intermédiaire de sa cuvette 18 faisant office de réservoir. Les autres orifices 28 servent à l'évacuation de l'air lors du remplissage.

Selon une variante de réalisation, la plaque inférieure 10 peut être, lors de sa fabrication, en utilisant les techniques d'injection de plastique, dotée directement du canal 14 et du joint d'étanchéité 20 qui fait ainsi partie intégrante de la plaque.

Dans ce cas, la liaison des deux plaques est également réalisée par soudage aux ultra-sons tout en exerçant une pression sur la plaque supérieure 22. Lors de cette opération, le rebord 26 de la plaque supérieure et le joint d'étanchéité 20 de la plaque inférieure sont tous deux mis en fusion et écrasés jusqu'à ce que les deux plaques soient en contact et ferment le canal 14.

On voit donc que, dans ce mode de réalisation, le joint 20 assure à la fois la liaison des plaques entre elles et la fermeture étanche du canal 14.

Ainsi est proposé un porte échantillon miniaturisé de structure particulièrement simple et dont la fabrication ne fait pas intervenir de procédés coûteux (lithographie, par exemple). Un tel dispositif a donc un prix de revient très bas, sans que cela affecte sa qualité.

## Revendications

1. Dispositif miniaturisé destiné au transport et à l'analyse d'un échantillon liquide, comportant:
- une plaque inférieure (10) dont la face supérieure (12) est percée d'un canal (14) destiné à recevoir ledit échantillon,
- une plaque supérieure (22) dont la face inférieure (24) est appliquée sur la plaque inférieure et munie d'au moins un orifice (28) disposé de manière à déboucher dans ledit canal, et
- des moyens rendre les deux plaques solidaires l'une de l'autre et fermer la canal de manière étanche,
**caractérisé en ce que** lesdits moyens comportent:
- un rebord en surépaisseur (26) formant le pourtour de l'une desdites faces et lié de manière étanche à l'autre de ces faces, et
- un joint d'étanchéité (20) interposé entre lesdites faces le long des bords du canal (14).

2. Dispositif selon la revendication 1, **caractérisé en ce que** ledit joint d'étanchéité (20) est un élément rapporté.

3. Dispositif selon la revendication 2, **caractérisé en ce que** ledit joint est en silicone.

4. Dispositif selon la revendication 1, **caractérisé en ce que** ledit joint d'étanchéité (20) fait partie intégrante de l'une desdites plaques.

5. Dispositif selon la revendication 1, **caractérisé en ce que** ledit canal (14) comporte une cuvette (18), formant réservoir, à l'endroit où débouche ledit orifice (28).

6. Dispositif selon la revendication 1, **caractérisé en ce que** ledit orifice (28) a la forme d'un entonnoir.

7. Procédé de fabrication du dispositif selon la revendication 2, **caractérisé en ce que** ledit joint d'étanchéité (20) est déposé sur l'une des plaques par tampographie.

8. Procédé de fabrication du dispositif selon la revendication 1, **caractérisé en ce que** ledit rebord (26) est lié à l'autre face par soudage aux ultra-sons.

9. Procédé de fabrication du dispositif selon la revendication 4, **caractérisé en ce que** ledit rebord (26) et ledit joint (20) sont liés à l'autre face par soudage aux ultra-sons.
